# EUROPEAN PATENT SPECIFICATION

(11) **EP 0 935 331 B1**
(45) Date of publication and mention of the grant of the patent: **11.06.2008**
(21) Application number: 98938930.9
(22) Date of filing: 21.08.1998
(51) Int. Cl.: H02K 13/00, H01R 39/06, H01R 43/08, H01R 39/04

(54) **COMMUTATOR OF IMPROVED SEGMENT JOINABILITY**
KOMMUTATOR MIT VERBESSERTEN SEGMENTVERBINDUNGEN
COMMUTATEUR DOTE D'UNE CAPACITE AMELIOREE DE RACCORDEMENT DE SEGMENTS

(30) Priority: 21.08.1997 JP 22509097
(43) Date of publication of application: 11.08.1999
(73) Proprietor: AISAN KOGYO KABUSHIKI KAISHA, Obu-shi, Aichi 474-0061 (JP); Harada Manufacturing Co. Ltd, Tokyo 110-0015 (JP)
(72) Inventor: FUJII, Shinichi, Aisan Kogyo Kabushiki Kaisha, Aichi 474-0061 (JP); KATO, Hirotaka, Aisan Kogyo Kabushiki Kaisha, Aichi 474-0061 (JP); HARADA, Takahiro, Harada Manufacturing Co., Ltd, Tokyo 110-0015 (JP); OTA, Haruyuki, Harada Manufacturing Co., Ltd, Tokyo 110-0015 (JP); ONOZAKI, Seiji, Shinko Denki Company Limited, Tokyo 103-0013 (JP)
(74) Representative: Kramer - Barske - Schmidtchen
(86) International application number: PCT/JP1998/003710
(87) International publication number: WO 1999/010968

(56) References cited:
- EP-A- 0 523 649
- JP-A- 7 298 560
- JP-A- 9 154 261
- JP-A- 9 182 381
- JP-T- 5 502 974

## Description

### Technical Field

The present invention relates to a commutator for a rotor, and more particularly, to a commutator preferably used in an electro-drive type fuel pump.

### Background Art

A known electro-drive type fuel pump for an in-tank system is installed in a fuel tank. In such an electro-drive type fuel pump of an in-tank system, a commutator formed of copper, silver, etc., is used. However, if such a commutator is used in a mixed fuel system containing alcohol, it may react with the fuel and may corrode, and deterioration thereof is accelerated.

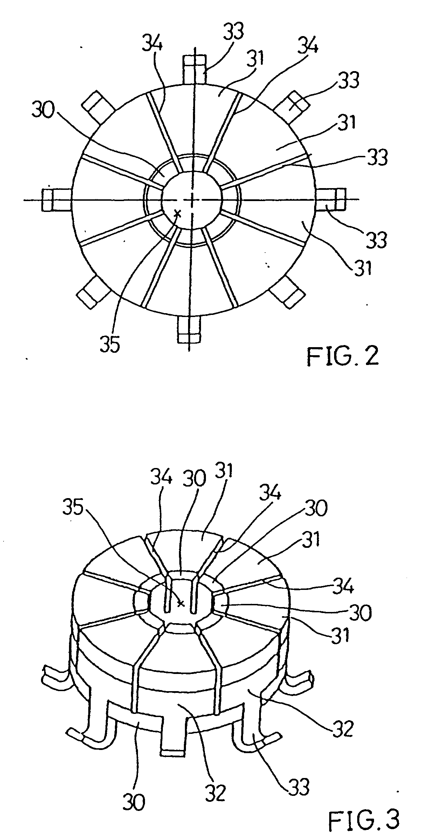

Therefore, a commutator made of carbon has been proposed. Carbon has better corrosion-resisting properties and a long service life. Because carbon has self-lubricating properties, satisfactory operation with brushes can be achieved. FIG. 2 is a plan view showing one example of a flat type commutator that is formed of carbon and FIG. 3 is a perspective view thereof. As shown in FIGS. 2 and 3, the flat type commutator comprises a plurality of radially disposed segments 31 that have a generally fan-shaped configuration, conductive members 32, each electrically connected to the respective segments 31 and formed from a conductive material such as copper, and an insulative resin-made substrate 30 for supporting the segments 31 and the conductive members 32.

Each of the segments 31 is formed by compressing and molding carbon powder and by thermally treating the segments 31. Further, a hook 33 that connects a coil of an armature 7 is formed on the conductive members 32. The resin-made substrate 30 is formed at the center of the axis of rotation of the segments 31. An axial hole 35, into which the armature (rotor) shaft of a motor is fitted, is formed in the resin-made substrate 30 at the center axis of rotation. Each of the segments 31 and conductive members 32 are insulated from other segments 31 and conductive members 32 by slits 34 formed in the radial direction.

A method for producing such a commutator made of carbon is disclosed in U.S. Patent No. 5,175,463. In this fabrication method, the surface of a ring-like carbon member having a parallel surface is first treated so that a metallic ring may be joined thereto. This metallic ring is made of a conductive material, such as copper, and is attached to the surface of the ring-like carbon member by soldering. The commutator is filled with resin to form a resin substrate that supports the carbon member and the metallic ring. Slits 34 are then formed in the carbon member and the metallic ring in the radial direction in order to divide the carbon member and the metallic ring into sections, so that the segments 31 and the conductive members 32 are formed. Subsequently, an armature (rotor) coil is connected to the conductive member 32 by soldering or welding.

In this fabrication method, because the carbon member and the metallic ring are joined together by soldering, the solder can sometimes melt, due to the heat that is necessary to connect the coil, whether by soldering or welding, to the conductive members that are formed by dividing the metallic ring. The bonding strength between the segments, which are created by dividing the carbon member and the conductive member, decreases as the solder melts. Thus, the segments may separate from the conductive member, and conductivity may be diminished.

EP 0 523 649 A1 describes a flat disk type commutator comprising carbon segments, conductive members and a supporting member, wherein said carbon segments are brazed to the conductive members using a brazing material. Furthermore, the brazing material has a melting temperature higher than the temperature used to connect a coil to the conductive member, since said solder layer does not melt when said coil is connected to the conductive member.

It is, accordingly, an object of the invention to prevent the bonding strength between the carbon member and the conductive member from decreasing and to improve conductivity by reducing differences in the thermal expansion coefficients between the conductive member and the segments, even though heat is utilized to connect a coil to the conductive members, and by improving the bonding strength between the segments and the conductive members.

With the invention, the segments (carbon member) and the conductive member (metallic ring) are brazed together with a brazing material that does not melt from the heat applied when connecting the coil to the conductive member, which is a brazing material including nickel and chromium. Thus, the heat generated in connecting the coil to the conductive member does not melt the brazing material.

The contact area between the segments and the conductive members also is decreased. Further, the firing temperature of the segments is higher than the melting point of the brazing material, so as to prevent the segments from cracking when cooling the brazing material.

The present invention will be better understood by reading the description of preferred embodiments described below with reference to the accompanying drawings or reading the scope of claims.

### Brief Description of the Drawings

FIG. 1 is an outline view of an electro-drive type fuel pump;
FIG. 2 is a plan view showing a commutator formed of carbon;
FIG. 3 is a perspective view showing a commutator formed of carbon;
FIG. 4 is a view showing a metallic plate used to produce a commutator according to a first preferred embodiment of the invention;
FIG. 5 is a view showing a metallic ring formed of a metallic plate illustrated in FIG. 4;
FIG. 6 is a view showing a state in which a carbon member is joined to the metallic ring illustrated in FIG. 5;
FIG. 7 is a view in which a carbon member is joined to the metallic ring illustrated in FIG. 5;
FIG. 8 is a view in which the metallic ring and the carbon member illustrated in FIG. 7 are integrated with a resin substrate;
FIG. 9 is a view showing a commutator according to the first preferred embodiment of the invention;
FIG. 10 is a cross-sectional view taken along the line X-X in FIG. 9;
FIG. 11 is a cross-sectional view taken along the line XI-XI in FIG. 9;
FIG. 12 is view showing another example of a claw of the metallic ring;
FIG. 13 is a view showing a construction for positioning the metallic ring and the carbon member;
FIG. 14 is a view showing another construction for positioning the metallic ring and the carbon member;
FIG. 15 is a view showing a metallic plate used to produce a commutator according to a second preferred embodiment of the invention;
FIG. 16 is a view showing a metallic ring formed from the metallic plate illustrated in FIG. 15;
FIG. 17 is a view showing a state in which a carbon member is joined to the metallic ring illustrated in FIG. 15;
FIG. 18 is a view in which a carbon member is jointed to the metallic ring illustrated in FIG. 15;
FIG. 19 is a view in which the metallic ring and the carbon member illustrated in FIG. 18 are integrated with a resin substrate;
FIG. 20 is a view showing a commutator according to the second preferred embodiment of the invention;
FIG. 21 is a cross-sectional view taken along the line XXI-XXI in FIG. 20;
FIG. 22 is a cross-sectional view taken along the line XXII-XXII in FIG. 21;
FIG. 23 is a view showing a metallic plate used to produce a commutator according to a third preferred embodiment of the invention;
FIG. 24 is a view showing a metallic ring formed from the metallic plate illustrated in FIG. 23;
FIG. 25 is a view showing a state in which a carbon member is joined to the metallic ring illustrated in FIG. 24;
FIG. 26 is a view in which a carbon member is jointed to the metallic ring illustrated in FIG. 23;
FIG. 27 is a view in which the metallic ring and the carbon member illustrated in FIG. 26 are integrated with a resin substrate;
FIG. 28 is a view showing a commutator according to the third preferred embodiment of the invention;
FIG. 29 is a cross-sectional view taken along the line XXIX-XXIX in FIG. 28; and
FIG. 30 is a view showing a correlation between the bending strength of the carbon member and the yield (non-defective ratio) of the commutators.

### Best Modes for Carrying Out the Invention

### First Preferred Embodiment

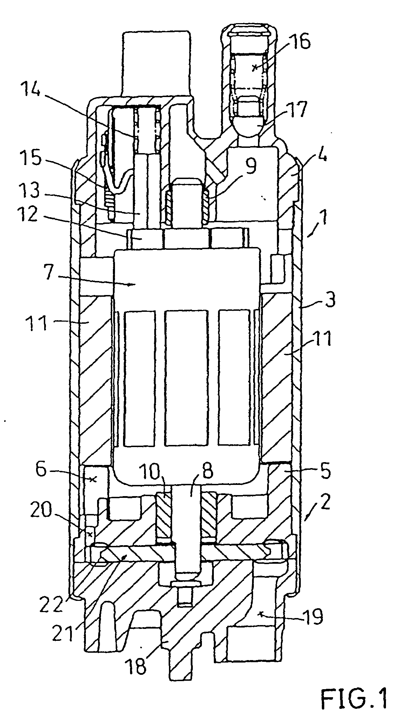

FIG. 1 shows one example of an electro-drive type fuel pump of in-tank system that is provided in a fuel tank.

An electro-drive type fuel pump illustrated in FIG. 1 comprises a motor section 1 that is incorporated within a cylindrically formed housing 3, and a pump section 2 that is incorporated below the housing 3. A motor cover 4 is attached to the upper end of the housing 3 and a pump cover 5 is attached to the lower end thereof. The upper and lower ends of a shaft 8 are supported at the motor cover 4 and the pump cover 5 by bearings 9 and 10, so that an armature 7 is rotatably disposed within a motor chamber 6. A magnet 11 is disposed on the inner circumferential wall of the housing 3. A plurality of commutators 12 connected to a coil are disposed on the armature 7 and are insulated from each other. The motor cover 4 includes a brush 13, which can slidingly contact the commutators 12 of the armature 7, and a spring 14 that biases the brush 13. The brush 13 is connected to an external connection terminal via a choke coil 15. A fuel supply pipe is connected to a check valve 17 that is incorporated in a discharge port 16 and is secured to the motor cover 4. Further, on the underside of the pump cover 5, a pump body 18 is attached to the lower end part of the housing 3 by caulking. A fuel inlet port 19 is provided in the pump body 18. A fuel outlet port 20 is provided in the pump cover 5. A disk-shaped impeller 21 having a number of blade grooves 22 formed in the circumferential direction is disposed in the pump chamber formed by the pump body 18 and the pump cover 5. The impeller 21 is fitted onto and connected to the armature shaft 8.

In such an electro-drive type fuel pump, the impeller 21 is driven and rotated by supplying an electric current to the motor section 1, which rotates the axis of the armature 7. Thus, fuel in the fuel tank is suctioned through the inlet port 19 and is supplied to the motor chamber 6 through the outlet port 20, so that the fuel is discharged from the discharge port 16 into a fuel supply pipe.

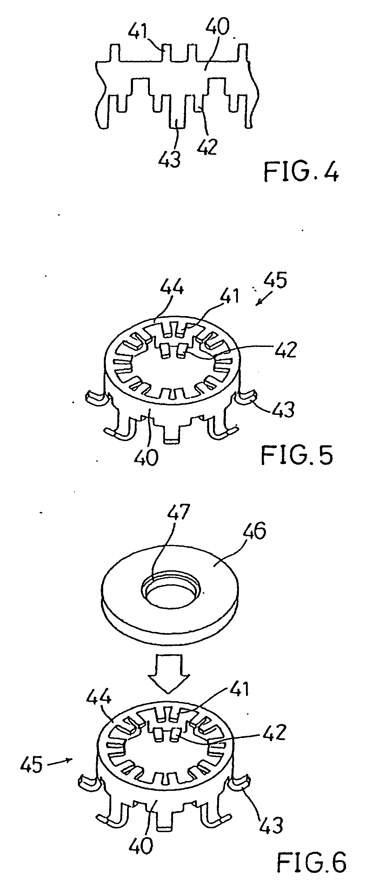

A description will now be given of a first preferred embodiment of a commutator according to the invention with reference to FIGS. 4 through 9. It will be noted in the specification that segments formed by sectioning a carbon member are called "segments," and members formed by sectioning a metallic ring are called "conductive members."

First, as shown in FIG. 4, a conductive metallic plate is punched and has a body section 40, claws (retaining members) 41 and 42 to retain a resin substrate, and a hook 43 for connecting to a coil. Preferably, a metallic plate is used that is made of copper or a copper alloy having a higher conductivity.

As shown in FIG.5, the body section 40 of the metallic plate is then curled into a cylindrical shape. Metallic ring 45 is formed by folding the claws 41 and 42 towards the center of the cylindrical body section and by folding the hook 43 outward thereof. If the metallic plate is made of copper or a copper alloy, the curling of the body section 40 and the folding of the claws 41 and 42 is further improved.

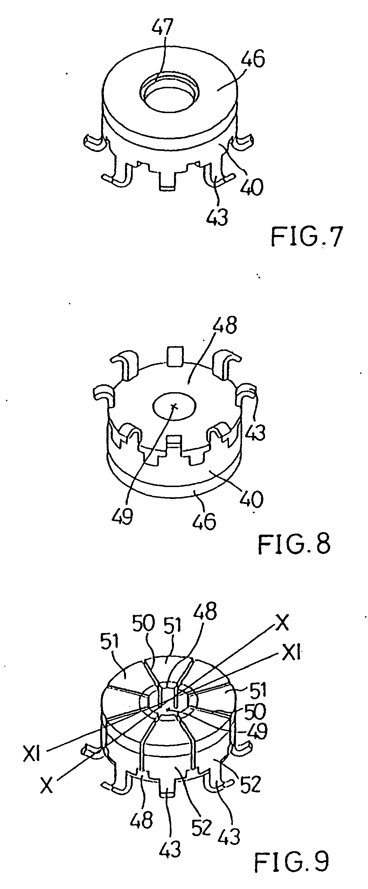

As shown in FIGS. 6 and 7, a disk-shaped carbon member 46 is formed from carbon powder that is compressed molded and heat-treated and is joined to the metallic ring 45 by brazing.

An investigation was made with respect to the bonding properties of mercury, copper, nickel, and chromium, and resulted in a finding that the bonding properties between nickel and chromium were better than the bonding properties between mercury, copper and chromium. Further, as will be described below, in order to prevent the bonding properties between the segments (carbon member) and the conductive material (metallic rings) from deteriorating, due to the heat that is applied when connecting the coil to the conductive member, the melting point of the brazing material should be higher than the temperature that the brazing material reaches from the heat absorbed when connecting the coil to the conductive member. If the melting point of the brazing material is higher than the soldering or welding temperature (for example, approx. 1,000 C), this condition is satisfied. Therefore, a brazing material containing nickel and chromium is according to the present invention as the brazing material to join the carbon member 46 and the metallic rings 45.

However, if the thermal expansion coefficient of the carbon member 46 is different from the thermal expansion coefficient of the brazing material, cracks, etc., are likely to form in the carbon member 46 when the brazing material cools. However, because the difference in the thermal expansion coefficient between chromium used in the brazing material and the carbon member 46 is small (i.e., the thermal expansion coefficient of chromium is 8.4 x 10⁻⁶/C, and the thermal expansion coefficient of carbon is 7 x 10⁻⁶/ C), stress in the carbon member 46, which results from a difference in the thermal expansion efficient between the carbon material 46 and the brazing material, is insignificant as the brazing material cools after the brazing step is completed. Therefore, it is possible to prevent the carbon member 46 from cracking, etc., when the brazing material cools. In this aspect, it is advantageous to use a brazing material containing chromium.

It is also necessary that the brazing temperature is less than the melting point of the metallic rings 45. In the preferred embodiment, a brazing material, JIS Z 3265 BNi-7 (Japanese Industrial Standards) containing chromium, of which the major constituent is nickel, was used as brazing material because it satisfies the above-mentioned conditions.

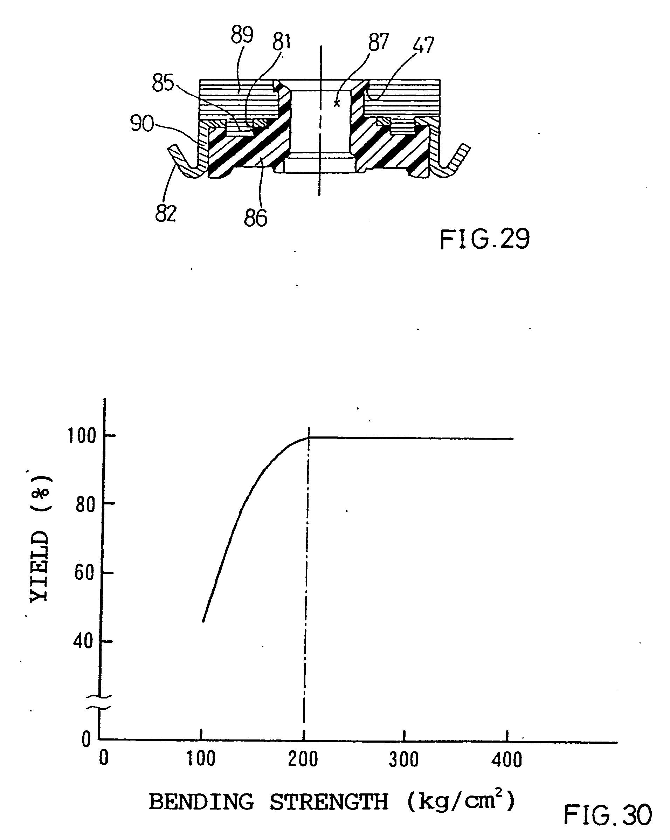

Further, because cracks, etc., are likely to form in the carbon member 46 during the brazing step, if the metallic rings 45 are brazed to a carbon member 46 having a low resistance to bending, the yield (non-defective ratio) of commutators produced is reduced. FIG. 30 shows a correlation between the bending strength of the carbon member and the yield of commutators if brazing is performed with a brazing material containing nickel and chromium. As shown in FIG. 30, if the bending strength of the carbon member is less than 200 kg/cm², the yield decreases. Therefore, the carbon member preferably has a bending strength of 200 kg/cm² or more.

Further, if the brazing temperature is higher than the firing temperature of carbon member 46, cracks, etc., are likely to form in carbon member 46 during the brazing step. Therefore, the firing temperature of the carbon member 46 is preferably higher than the brazing temperature. For example, carbon having a firing temperature that is higher than the melting point of a brazing material is used. Alternatively, a brazing material having a lower melting point than the firing temperature of the carbon member is used.

If carbon member 46 is brazed to the metallic ring 45 as illustrated in FIG.5, the brazing surface area of the carbon member 46 is small, because the end face of the metallic rings 45, i.e., the plate thickness face 44, is brazed. Thus, stress in the carbon member 46, which may be generated by a difference in the thermal expansion coefficients of carbon member 46 and the brazing material when the brazing material cools, is reduced, and it is possible to prevent cracks, etc., from forming in carbon member 46.

As shown in FIG. 8, the metallic rings 45 and the carbon members 46 are filled with resin to form a resin substrate 48 that supports the metallic rings 45 and the carbon members 46. At this time, a fitting hole 49 is opened and the armature axis 8 is fitted into the center of the rotational axis of the resin substrate 48. Because claws 41 and 42 are formed on the metallic rings 45 as retaining members that retain the resin substrate 48, the metallic rings 45 are firmly supported by the resin substrate 48. Further, a stepped portion 47 is formed in the carbon members 46, such that the stepped portion 47 forms an anchoring portion for the resin substrate 48. Thus, the carbon members 46 are firmly supported on the resin substrate 48 by the anchoring portion that is formed in the stepped portion 47.

As shown in FIG. 9, slits 50 are formed at the carbon members 46 and the metallic rings 45 in the radial direction, so that they are insulated from each other. A plurality of generally fan-shaped and radially disposed segments 51 and a plurality of conductive members 52, each joined to the respective segments 51, are formed.

A coil is connected to the hook 43 of the conductive members 52 by soldering, welding, etc. Because the conductive members 52 are formed of a metallic plate made of copper or copper alloy, the thermal conductivity is good, and the coil can be easily connected by welding.

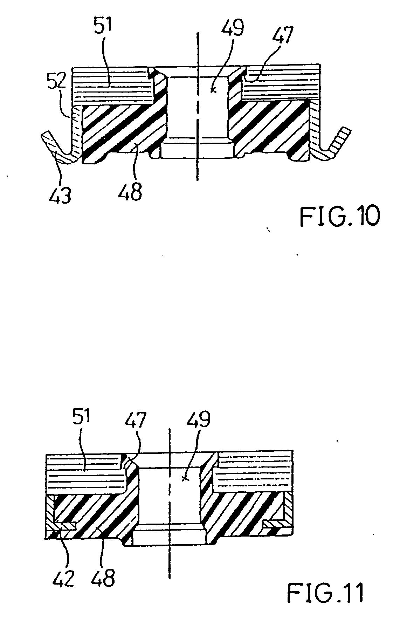

FIG. 10 is a cross-sectional view taken along the line X-X in FIG. 9, and FIG. 11 is also a cross-sectional view taken along the line XI-XI in FIG. 9.

As described above, because a brazing material having good bonding properties between the carbon members 46 and the metallic rings 45 is used as the brazing material to braze together the carbon members 46 and the metallic rings 45, it is not necessary to form any metal film, such as a plating, on the carbon members 46. As a result, fabrication is simplified. In addition, because the melting point of the brazing material is high, the brazing material will not melt due to the heat applied to the brazing material when connecting the coil to the hooks 43 of the conductive member 52 by soldering, welding, etc. As a result, the bonding strength between the segments 51 and the conductive member 52 is not decreased. Further, because the carbon members 46 and the metallic rings 45 are joined together before forming the resin substrate 48, carbon having a high firing temperature may be used. Therefore, the resistance of the carbon members 46 can be reduced, thereby reducing power loss. Still further, it is possible to prevent cracks, etc., from forming in the carbon members 46 as a result of the heat applied to the carbon member when the carbon members 46 are brazed.

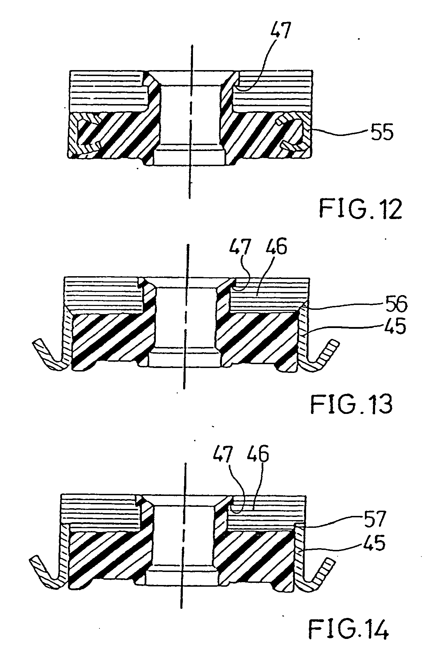

Further, the number of retaining members (claws 41 and 42) for retaining the resin substrate and installation place thereof may be appropriately changed, and the retaining members may be omitted. Further, the shape of the retaining members (claws 41 and 42) may modified in various ways. For example, as shown in FIG. 12, retaining members 55 having a C-shaped cross section may be used. Also, the supporting member is not limited to a resin substrate in order to support the segments (carbon members) and the conductive members (metallic rings). The shape, position, etc., of the stepped portion 47 formed on the carbon members 46 may be appropriately modified, and indeed the stepped portion 47 may be omitted.

Further, a construction may be utilized that facilitates the positioning of the carbon members 46 and the metallic rings 45. For example, as shown in FIG. 13, a tapered section 56 may be formed, by which the carbon members 46 and the metallic rings 45 can be attached at a position opposed to each other. The carbon members 46 and the metallic rings 45 may be brazed together after positioning at the tapered section 56. Alternatively, as shown in FIG. 14, a groove 57 is formed in the carbon members 46. After the end face of the metallic ring 45 is inserted into the groove 57, and the carbon members 46 and the metallic rings 45 are positioned, the engaging portions may be brazed.

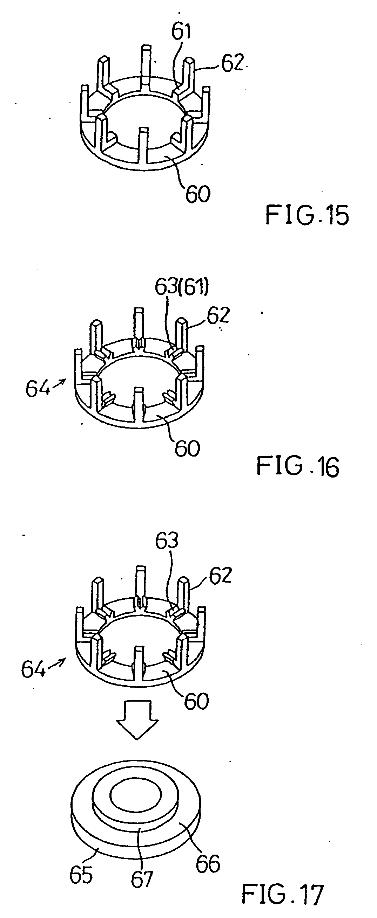

A description will now be given of a second preferred embodiment of the invention with reference to FIGS. 15 through 20. The second preferred embodiment differs from the first embodiment only in the shapes of the metallic rings and the carbon members.

As shown in FIG. 15, a conductive metallic plate is punched and has a ring-like body section 60, and claw forming portions 61 and hooks 62. Further, the area of the body section 60 is made as small as possible to prevent the carbon members from cracking, etc., due to stress in the carbon members when the brazing material cools. As shown in FIG. 16, the central part of the claw forming portions 61 is divided, so as to form a metallic ring 64 having a claw 63 as a retaining member to retain the resin substrate.

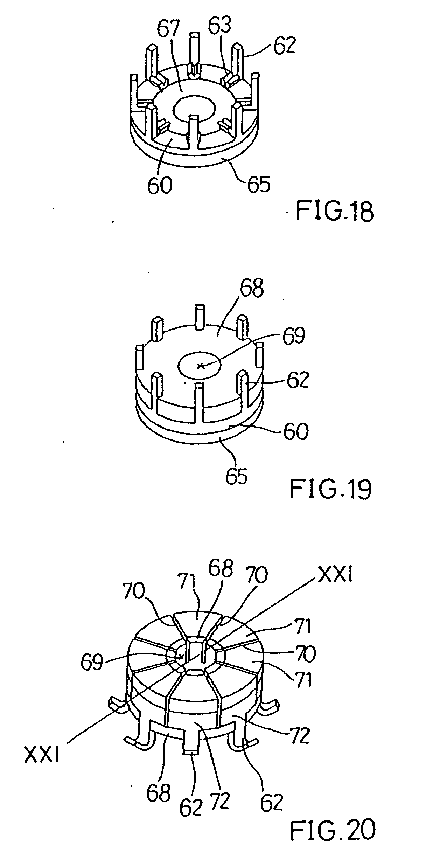

Next, as shown in FIGS. 17 and 18, the metallic rings 64 and disk-shaped carbon members 65 are brazed together using a brazing material. A base 66 and a fitting portion 67 are formed at the carbon members 65. By inserting the fitting portion 67 of the carbon members 65 into the inner circumferential hole of the metallic ring 64, the carbon members 65 and the metallic rings 64 can be easily positioned. After the carbon members 65 and the metallic rings 64 are positioned, the opposing portions of the body section 60 of the metallic rings 64 and the base 66 of the carbon members 65 are brazed and joined together.

As shown in FIG. 19, the metallic rings 64 and the carbon members 65 are filled with resin, thus forming a resin substrate 68. At this time, a fitting hole 69 is opened, and the armature axis 8 is fitted inside along the center of rotational axis of the resin substrate 68. Further, a stepped portion 47, which is similar to that in the first preferred embodiment, is formed in the carbon members 65. Thus, the metallic rings 64 are firmly retained in the resin substrate 68 by the claw 63 and the carbon members 65 are firmly retained by the anchoring portion of the resin substrate formed in the stepped portion 47.

As shown in FIG. 20, slits 70 are then formed in the carbon members 65 and the metallic rings 64 in the radial direction, so as to insulate each other and to form a plurality of radially disposed and generally fan-shaped segments 71 and a plurality of conductive members 72 joined to the respective segments 71. Hooks 62 of the conductive members 71 are folded outward, and a coil is connected to hooks 62.

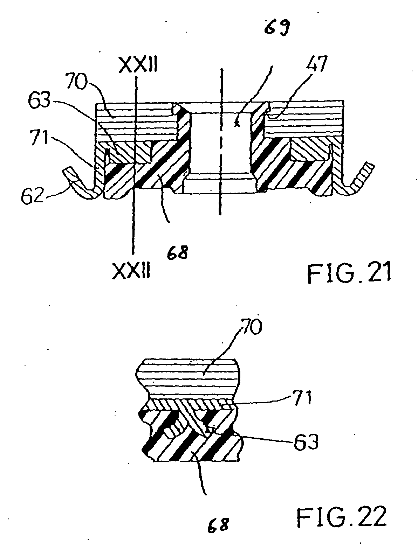

FIG. 21 shows a cross-sectional view taken along the line XXI-XXI in FIG. 20, and FIG. 22 shows a cross-sectional view taken along the line that XXII-XXII in FIG. 21.

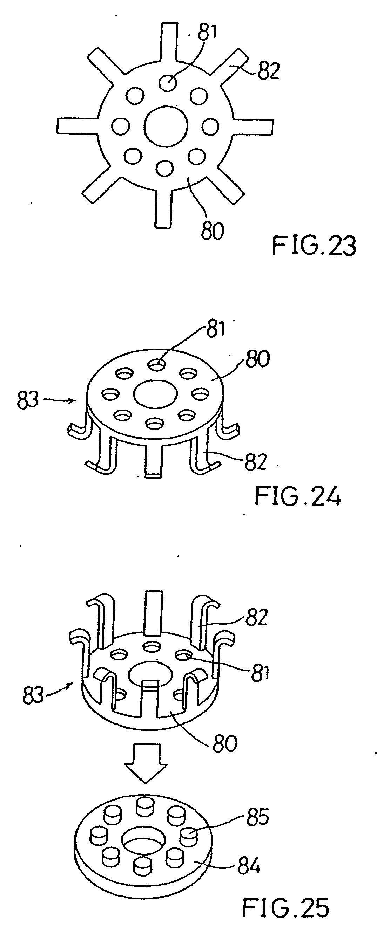

A description will now be given of a third preferred embodiment of the invention with reference to FIGS. 23 through 28. The third preferred embodiment differs from the first and second preferred embodiments only in the shape of the metallic ring and the carbon member.

As shown in FIG. 23, a conductive metallic plate is punched and has a ring-like body section 80, a hole 81, and a hook 82. As shown in FIG. 24, the hook 82 is folded outward to form a metallic ring 83.

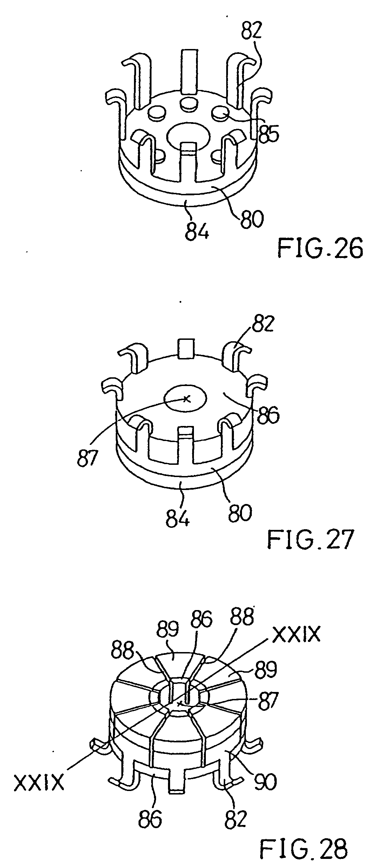

Next, as shown in FIGS. 25 and 26, the metallic ring 83 and a disk-shaped carbon member 84 are brazed together using a brazing material containing chromium and nickel, so that a protrusion part 85 is formed on the carbon members 84. By inserting the protrusions 85 of the carbon member 84 into the holes 81 in the metallic ring 83, the carbon member 84 and the metallic ring 83 can be easily positioned. After the carbon member 84 and the metallic ring 83 are positioned, the hole 81 and the protrusions 85 are brazed together. In order to prevent the carbon member 84 from cracking, etc. due to stress in the carbon member 84 when the brazing material cools, the end face of the metallic ring 83 to be brazed, i.e., the circumferential surface of the hole 81, is as small as possible.

As shown in FIG. 27, the metallic ring 83 and the carbon member 84 are filled with resin in order to form a resin substrate 86. At this time, a fitting hole 87 is formed, into which the armature axis 8 is fitted along the center of rotational axis of the resin substrate 86. A stepped portion 47 is formed, as in the first preferred embodiment, so that the metallic ring 83 is firmly retained in the resin substrate 86 by the protrusions 85 of the carbon member 84. The protrusions 85 protrude from the hole 81 of the metallic ring 83 while the carbon member 65 is firmly retained at the resin substrate 86 by the anchoring part of the resin substrate, which is formed in the stepped portion 47.

As shown in FIG. 28, slits 88 are formed at the carbon member 84 and the metallic ring 83 in the radial direction, so as to insulate each other, and to form a plurality of radially disposed and generally fan-shaped segments 89, and a plurality of conductive members 90 respectively connected to the respective segments 89. A coil is connected to the hooks 82 of the conductive members 90. FIG. 29 shows a cross-sectional view taken along the line XXIX-XXIX in FIG. 28.

The shape of the metallic ring and the carbon member, the structure of the brazing portions of the metallic ring and the carbon member, and method thereof, etc. may be modified in various ways.

As described above, in a commutator according to the invention, the bonding strength between the carbon member (segments) and the metallic ring (conductive members) is not reduced, because the brazing material does not melt from the heat applied to the brazing material when connecting a coil to the conductive members. In addition, because a metallic film, such as plating, is not required to be formed on the carbon member, fabrication is simplified and costs can be reduced. Further, because the difference in the thermal expansion coefficients between the brazing material and the carbon member is small, the carbon member can be prevented from cracking, etc., as a result of stress generated after the brazing is finished and as the brazing material cools. Still further, because the metallic ring is configured so that the brazing surface area of the carbon member is reduced, the carbon member can be prevented from cracking from stress when the brazing material cools. Further, because the metallic plate having the metallic ring can be produced by punching, the production is simplified and costs thereof is reduced. Further, because a resin substrate is formed after the carbon member and the metallic ring are adhered together, the firing temperature of the carbon member can be increased. Thus, because the resistance of the carbon member can be decreased, power loss can be reduced. As a result, the carbon member can be further prevented from cracking, etc., from the heat when the carbon member 46 is brazed. A commutator according to the invention is useful, not only for an electro-drive type fuel pump of in-tank system, but is also useful for rotating machines such as motors, generators and dynamos in a variety of fields.

## Claims

1. A commutator comprising segments (51; 71; 89) formed of carbon, conductive members (52; 72; 90) made of copper to which a coil is to be connected, and a supporting member (48; 68; 86) that supports said segments and conductive members, wherein said segments are brazed to said conductive members using a brazing material, the brazing material having a melting point that is higher than the temperature used to connect the coil to said conductive members (52; 72; 90), **characterized in that** said brazing material contains nickel and chromium.

2. The commutator as set forth in claim 1, wherein said segments (51; 71; 89) are formed of a material having a firing temperature that is higher than the brazing temperature.

3. The commutator as set forth in claim 1, wherein the brazing temperature is less than the melting point of said conductive members (52; 72; 90).

4. The commutator as set forth in any one of claims 1 to 3, wherein hooks (43; 62; 82) for connecting a coil are integrally molded with said conductive members (52; 72; 90).

5. The commutator as set forth in claim 4, wherein said supporting member (48; 68; 86) is formed of resin, and wherein a retaining member (41, 42; 63) for retaining said supporting member is integrally molded with said conductive members (52; 72; 90).

6. Use of a commutator as set forth in any one of claims 1 to 5 in an electro-drive type fuel pump.

7. A method for producing a commutator having segments (51; 71; 89) formed of carbon, conductive members (52; 72; 90) made of copper to which a coil is to be connected, and a supporting member (48; 68; 86) that supports said segments and said conductive members, comprising the steps of:
brazing a metallic ring (45; 64; 83) comprising copper and a carbon member (46; 65; 84) using a brazing material, the brazing material having a melting point that is higher than the temperature used to connect the coil to said conductive members (52; 72; 90),
forming a resin substrate (48; 68; 86) on said metallic ring and said carbon member; and
forming segments (51; 71; 89) and conductive members (52; 72; 90) by making slits (50; 70; 88) on said metallic ring and said carbon member, **characterized in that** said brazing material contains nickel and chromium.

## Patentansprüche

1. Kommutator, der aus Kohlenstoff gebildete Segmente (51; 71; 89), leitende Elemente (52; 72; 90), die aus Kupfer hergestellt sind, mit denen eine Spule verbunden werden soll, und ein Trägerelement (48; 68; 86), das die Segmente und die leitenden Elemente hält, umfasst, wobei die Segmente mit einem Lotmaterial an die leitenden Elemente gelötet sind, wobei das Lotmaterial einen Schmelzpunkt aufweist, der höher ist als die Temperatur, die zum Verbinden der Spule mit den leitenden Elementen (52; 72; 90) eingesetzt wird, **dadurch gekennzeichnet, dass** das Lotmaterial Nickel und Chrom enthält.

2. Kommutator nach Anspruch 1, bei dem die Segmente (51; 71; 89) aus einem Material gebildet sind, das eine Brenntemperatur aufweist, die höher ist als die Löttemperatur.

3. Kommutator nach Anspruch 1, bei dem die Löttemperatur niedriger ist als der Schmelzpunkt der leitenden Elemente (52; 72; 90).

4. Kommutator nach einem der Ansprüche 1 bis 3, bei dem Haken (43; 62; 82) zum Verbinden einer Spule integriert mit den leitenden Elementen (52; 72; 90) geformt sind.

5. Kommutator nach Anspruch 4, bei dem das Trägerelement (48; 68; 86) aus Harz gebildet ist und bei dem ein Halteelement (41, 42; 63) zum Halten des Trägerelements integriert mit den leitenden Elementen (52; 72; 90) geformt ist.

6. Verwendung eines Kommutators nach einem der Ansprüche 1 bis 5 in einer Kraftstoffpumpe des elektrisch angetriebenen Typs.

7. Verfahren zur Herstellung eines Kommutators, der aus Kohlenstoff gebildete Segmente (51; 71; 89), leitende Elemente (52; 72; 90), die aus Kupfer hergestellt sind, mit denen eine Spule verbunden werden soll, und ein Trägerelement (48; 68; 86), das die Segmente und die leitenden Elemente hält, aufweist, umfassend die Schritte:
Löten eines Metallrings (45; 64; 83), der Kupfer umfasst, und eines Kohlenstoffelements (46; 65; 84) mit einem Lotmaterial, wobei das Lotmaterial einen Schmelzpunkt aufweist, der höher ist als die Temperatur, die zum Verbinden der Spule mit den leitenden Elementen (52; 72; 90) eingesetzt wird,
Bilden eines Harzsubstrats (48; 68; 86) auf dem Metallring und dem Kohlenstoffelement, und
Bilden von Segmenten (51; 71; 89) und leitenden Elementen (52; 72; 90) durch Herstellen von Schlitzen (50; 70; 88) auf dem Metallring und dem Kohlenstoffelement, **dadurch gekennzeichnet, dass** das Lotmaterial Nickel und Chrom enthält.

## Revendications

1. Commutateur comprenant des segments (51 ; 71 ; 89) formés en carbone, des éléments conducteurs (52 ; 72 ; 90) fabriqués en cuivre auxquels une bobine doit être raccordée, et un élément de support (48 ; 68 ; 86) qui supporte lesdits segments et éléments conducteurs, dans lequel lesdits segments sont brasés sur lesdits éléments conducteurs en utilisant un matériau de brasage, le matériau de brasage présentant un point de fusion qui est supérieur à la température utilisée pour raccorder la bobine auxdits éléments conducteurs (52 ; 72 ; 90), **caractérisé en ce que** ledit matériau de brasage contient du nickel et du chrome.

2. Commutateur selon la revendication 1, dans lequel lesdits segments (51 ; 71 ; 89) sont formés à partir d'un matériau présentant une température de cuisson qui est supérieure à la température de brasage.

3. Commutateur selon la revendication 1, dans lequel la température de brasage est inférieure au point de fusion desdits éléments conducteurs (52 ; 72 ; 90).

4. Commutateur selon l'une quelconque des revendications 1 à 3, dans lequel des crochets (43 ; 62 ; 82) destinés à raccorder une bobine sont moulés d'un seul tenant avec lesdits éléments conducteurs (52 ; 72 ; 90).

5. Commutateur selon la revendication 4, dans lequel ledit élément de support (48 ; 68 ; 86) est formé en résine, et dans lequel un élément de retenue (41, 42 ; 63) destiné à retenir ledit élément de support est moulé d'un seul tenant avec lesdits éléments conducteurs (52 ; 72 ; 90).

6. Utilisation d'un commutateur tel que celui exposé selon l'une quelconque des revendications 1 à 5 dans une pompe à carburant du type à entraînement électrique.

7. Procédé de production d'un commutateur présentant des segments (51 ; 71 ; 89) formés en carbone, des éléments conducteurs (52 ; 72 ; 90) fabriqués en cuivre auxquels une bobine doit être raccordée, et un élément de support (48 ; 68 ; 86) qui supporte lesdits segments et lesdits éléments conducteurs, comprenant les étapes consistant à :
braser une bague métallique (45 ; 64 ; 83) comprenant du cuivre et un élément en carbone (46 ; 65 ; 84) en utilisant un matériau de brasage, le matériau de brasage présentant un point de fusion qui est supérieur à la température utilisée pour raccorder la bobine auxdits éléments conducteurs (52 ; 72 ; 90),
former un substrat résineux (48 ; 68 ; 86) sur ladite bague métallique et ledit élément en carbone ; et
former des segments (51 ; 71 ; 89) et des éléments conducteurs (52 ; 72 ; 90) en pratiquant des fentes (50 ; 70 ; 88) sur ladite bague métallique et ledit élément en carbone, **caractérisé en ce que** ledit matériau de brasage contient du nickel et du chrome.
